# DEMANDE DE BREVET EUROPEEN

(11) **EP 0 790 511 A1**
(43) Date de publication de la demande: **20.08.1997**
(21) Numéro de dépôt: 97400293.3
(22) Date de dépôt: 10.02.1997
(51) Int. Cl.: G02B 6/44

(54) **Câble à fibres optiques sans élément de renfort**

(30) Priorité: 13.02.1996 FR 9601743
(71) Demandeur: ALCATEL ALSTHOM COMPAGNIE GENERALE D'ELECTRICITE, 75008 Paris (FR)
(72) Inventeur: Paborn, Jorgen, 51277 Sexdrega (SE); Elisson, Peter, 92400 Courbevoie (FR)
(74) Mandataire: Feray, Valérie

(57) **Abrégé**

Câble à fibres optiques (20) du type comportant une pluralité de faisceaux (22) composés de plusieurs rubans de fibres optiques, dans lequel les faisceaux (22) sont agencés selon une structure serrée incorporée dans une résine polymère (26) de sorte que les faisceaux (22) constituent eux-mêmes des moyens de renfort destinés à assurer la résistance du câble et à éviter les courbures des fibres optiques dues aux variations de température sans qu'il soit nécessaire d'incorporer un élément de renfort central et/ou périphérique dans le câble (20).

## Description

La présente invention concerne les câbles de transmission de données à fibres optiques, et en particulier un câble à fibres optiques ne comportant pas d'éléments de renfort.

Les câbles à fibres optiques sont de plus en plus utilisés dans les transmissions de données, soit comme câbles aériens, soit comme câbles enterrés. Quelle que soit leur application, un élément essentiel d'un câble à fibres optique est l'existence d'un élément de renfort central et/ou périphérique dont une des fonctions est de supporter les efforts de tension appliqués au câble lors de son installation. Un tel câble est décrit dans le brevet US 4.693.551.

Une autre fonction essentielle, remplie par l'élément de renfort central et/ou périphérique est d'éviter les courbures des fibres optiques dues aux variations de température et susceptibles d'entraîner des baisses de qualité dans la transmission des données. En effet, les fibres optiques présentent un faible coefficient d'expansion thermique et donc ne subissent que de faibles variations de longueur en cas de diminution (ou augmentation) de température, alors que le matériau plastique qui les entoure a tendance à subir une grande variation de longueur dans ce cas du fait d'un coefficient d'expansion thermique plus important. C'est pour cette raison que dans les câbles à fibres optiques, l'élément de renfort tel qu'illustré dans le brevet mentionné ci-dessus qui présente un coefficient d'expansion thermique approximativement égal à celui des fibres optiques, sert à limiter les variations de la longueur du câble en cas de variations de la température. Un tel élément de renfort est généralement en métal ou en matériau plastique renforcé de fibres de verre pour les câbles diélectriques.

En plus de la présence de l'élément de renfort et toujours dans le but d'éviter les courbures inappropriées des fibres optiques, ces dernières sont généralement placées de façon lâche dans leur gaine comme cela est montré dans le brevet US mentionné précédemment. Ce montage lâche permet à la gaine de subir librement des dilatations ou des contractions sans faire subir des contraintes aux fibres optiques donnant lieu à des courbures de ces dernières.

En plus d'un élément de renfort central, il est connu d'utiliser également une gaine en fibres d'aramide (connue sous la marque "Kevlar") à la périphérie du câble. A l'extrême, dans la mesure où les fibres optiques sont montées de façon lâche dans le câble comme expliqué précédemment et à condition d'utiliser une grande quantité de fibres d'aramide, on pourrait se dispenser d'un élément de renfort central rigide.

Malheureusement, l'utilisation d'éléments de renfort, et particulièrement dans le cas de câbles diélectriques lorsque l'élément de renfort est un matériau plastique renforcé par des fibres de verre et/ou de gaines en fibres d'aramide, est coûteuse et accroît le prix de revient du câble à fibres optique de façon considérable.

C'est pourquoi le but de l'invention est de fournir un câble à fibres optiques ne comportant pas d'élément de renfort central et/ou périphérique en métal ou en matériau plastique renforcé par des fibres de verre.

L'objet de l'invention est donc un câble à fibres optiques du type comportant au moins un faisceau composé de plusieurs rubans de fibres optiques, dans lequel le ou les faisceaux sont agencés selon une structure serrée incorporée dans une résine polymère, de sorte que les faisceaux de rubans de fibres optiques constituent eux-mêmes les éléments de renfort de câble.

Une autre caractéristique de l'invention est de disposer plusieurs faisceaux dans le câble, et de préférence un nombre carré, notamment quatre faisceaux, de sorte que chacun des faisceaux constitue un élément de renfort vis à vis des autres faisceaux.

Les buts, objets et caractéristiques de l'invention ressortiront mieux à la lecture de la description suivante en référence aux dessins dans lesquels :
la figure 1 représente un câble à fibres optiques comprenant plusieurs faisceaux de rubans de fibres optiques et un élément de renfort selon la technique antérieure, et
la figure 2 représente un câble à fibres optiques selon un mode de réalisation préféré de l'invention comportant quatre faisceaux de rubans de fibres optiques.

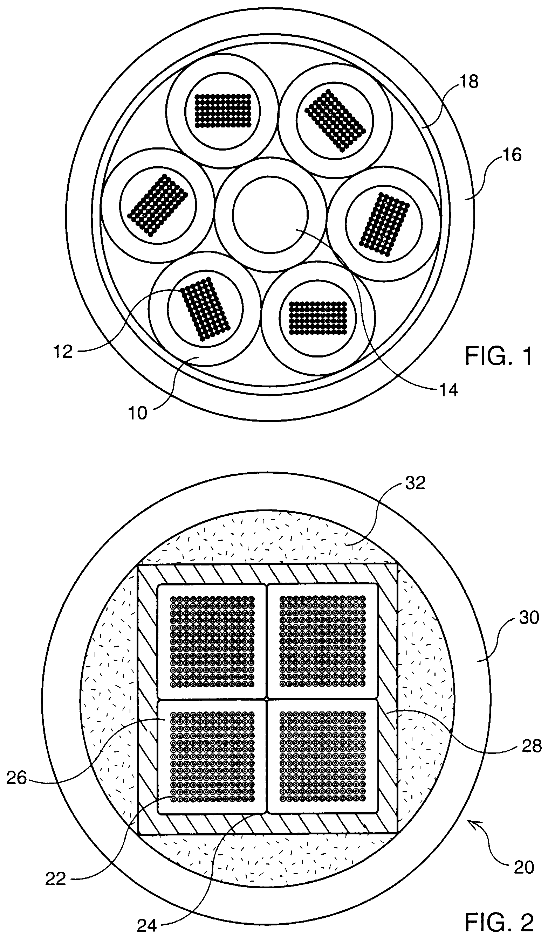

Comme illustré sur la figure 1, un câble à fibres optiques de la technique antérieure comprend plusieurs tubes 10, six tubes dans le cas présent en matière plastique dans chacun desquels se trouve un faisceau 12 de rubans de fibres optiques. Chaque ruban comprend généralement douze fibres optiques et un faisceau comprend six rubans. Comme on le voit, chaque faisceau a des dimensions inférieures au diamètre du tube, donc disposé selon une structure lâche de manière à ne pas subir de contraintes de la part du tube en matériau plastique du fait des variations de température.

Les tubes 12 de faisceaux de fibres optiques sont disposés autour d'un élément de renfort dont l'âme 14 est en matière plastique renforcée par des fibres de verre. Le câble comporte une gaine extérieure 16 en matière plastique, séparée des tubes 10 de faisceaux de fibres optiques par une enveloppe en fibres d'aramide 18, les interstices entre les tubes et l'enveloppe étant remplis par un matériau de remplissage. La fonction de l'élément de renfort 14 est de procurer la résistance voulue au câble et d'atténuer la contraction ou l'allongement du câble dus aux variations de température. Cette dernière fonction est également assurée par l'enveloppe 18 en fibres d'aramide.

Contrairement à un câble à fibres optiques de la technique antérieure, le câble à fibres optiques 20 selon l'invention, illustré sur la figure 2, ne comporte plus aucun élément de renfort.

Le câble 20 comprend quatre faisceaux 22 de fibres optiques, chaque faisceau étant constitué par l'empilement de neuf rubans de douze fibres optiques, ce qui lui donne une forme approximativement carrée. On doit noter que toute autre forme du faisceau est possible, mais la forme carrée est utilisée de préférence.

Comme on le voit sur la figure 2, chaque faisceau 22 est incorporé dans une unité 24 de forme approximativement carrée dans laquelle le faisceau est entouré d'une couche 26 de résine polymère par exemple une résine thermoplastique.

Dans le câble 20 illustré sur la figure 2, quatre unités de faisceaux de fibres optiques sont placées côte à côte de façon à former approximativement un carré. Cependant, le câble peut comporter un nombre quelconque de faisceaux tels que un, deux, trois ..., un nombre carré de faisceaux tel que quatre ou neuf étant préférable.

L'ensemble formé par les quatre unités de faisceaux est entouré par une enveloppe de fibres d'aramide de forme approximativement carrée. L'ensemble est placé dans une gaine extérieure 30 en matière plastique, les interstices entre l'enveloppe de fibres d'aramide et la gaine extérieure étant remplis par un matériau de remplissage 32 de faible coefficient de dilatation thermique et peu coûteux comme par exemple des fibres de verre, ou tout autre matériau ayant un coefficient de dilatation équivalent.

Le procédé de fabrication du câble 20 est relativement simple. On forme d'abord les faisceaux par empilement de rubans de fibres optiques. Puis, chaque unité est formée par extrusion d'une résine polymère autour de chaque faisceau de fibres optiques.

Ensuite, le câble illustré sur la figure 2 est constitué à partir de quatre unités formées comme décrit ci-dessus. Bien que ce ne soit pas une obligation, il est préférable de former le câble en torsadant les quatre unités obtenues par extrusion selon un sens hélicoïdal déterminé. L'enveloppe de fibres d'aramide constituée autour des quatre unités de faisceaux de fibres optiques est également torsadée, mais dans le sens hélicoïdal contraire au sens hélicoïdal choisi pour torsader les unités, ceci de façon à compenser le couple introduit par le torsadage des unités de fibres optiques. Le matériau de remplissage en fibres de verre est torsadé dans le même sens que les unités de faisceaux. Enfin, la gaine extérieure est extrudée en dernier lieu. On doit noter que cette dernière opération peut être effectuée en tandem avec les opérations précédentes.

Le câble 20 de fibres optiques constitué comme décrit ci-dessus, présente une aussi grande résistance qu'un câble comportant un élément de renfort. Mais la caractéristique essentielle est la résistance aux contraintes de tension ou de compression dues aux variations de température, procurée par la structure serrée des faisceaux de fibres optiques et qui empêche toute micro ou macro-courbure des fibres optiques pouvant entraîner des pertes de qualité dans la transmission des données.

L'enveloppe de fibres d'aramide qui constitue un élément coûteux du câble aura une épaisseur qui peut être d'autant plus réduite que la résistance à la traction du câble est accrue par les unités de faisceaux de fibres optiques. Ainsi, une structure serrée de quatre unités carrées telle qu'illustrée sur la figure 2, procure une résistance du câble meilleure qu'une structure à une seule unité et donc nécessite une épaisseur moindre de la couche de fibres d'aramide.

Enfin, un avantage du câble selon l'invention est que, à nombre de fibres optiques égal, un tel câble a un diamètre plus faible que celui d'un câble de la technique antérieure du fait que la structure est serrée et non libre comme c'est le cas pour ce dernier. De façon générale, un câble à fibres optiques à structure libre et à élément de renfort vendu actuellement compte 600 fibres optiques pour un diamètre extérieur de 40 mm, soit une densité de fibres de 1,6 mm². Un câble selon l'invention comportant 600 fibres optiques aura un diamètre extérieur d'environ 22 mm et donc une densité de fibres de 5/mm².

## Revendications

1. Câble à fibres optiques (20) du type comportant au moins un faisceau (22) composé de plusieurs rubans de fibres optiques et des moyens de renfort destinés à assurer la résistance du câble et à éviter les courbures des fibres optiques dues aux variations de température ;
ledit câble étant caractérisé en ce que le ou les faisceaux de rubans de fibres optiques sont agencés selon une structure serrée incorporée dans une résine polymère (26) de sorte que le ou lesdits faisceaux constituent eux-mêmes lesdits moyens de renfort.

2. Câble à fibres optiques (20) selon la revendication 1, comprenant au moins deux faisceaux (22) composés de rubans de fibres optiques et dans lequel chacun desdits faisceaux constitue un desdits moyens de renfort pour les autres faisceaux.

3. Câble à fibres optiques (20) selon la revendication 2, dans lequel chacun desdits faisceaux (22) est de forme approximativement carrée et est incorporé dans une unité (24) de forme approximativement carrée dans laquelle il est entouré d'une résine polymère.

4. Câble à fibres optiques (20) selon la revendication 3, comprenant quatre unités (24) de forme approximativement carrée disposées de façon à former un carré.

5. Câble à fibres optiques (20) selon l'une des revendications 1 à 4, dans lequel le ou lesdits faisceaux (22) composés de rubans de fibres optiques sont entourés d'une enveloppe en fibres d'aramide (28) permettant d'améliorer la résistance à la traction du câble.

6. Câble à fibres optiques (20) selon la revendication 5, dans lequel le ou lesdits faisceaux (22) sont torsadés selon un sens hélicoïdal déterminé alors que ladite enveloppe de fibres d'aramide est torsadée dans le sens hélicoïdal inverse.

7. Câble à fibres optiques (20) selon l'une des revendications précédentes, comprenant en outre une gaine cylindrique (30) en matière plastique et dans lequel les interstices entre lesdits faisceaux (22) et ladite gaine sont remplis par un matériau de remplissage (32) à base de fibres de verre ou tout autre matériau ayant un coefficient de dilatation thermique équivalent.
